(19) **Europäisches Patentamt**
**European Patent Office**
**Office européen des brevets**

(11) **EP 4 660 867 A1**

(12) **EUROPEAN PATENT APPLICATION**

(43) Date of publication:
**10.12.2025 Bulletin 2025/50**

(21) Application number: **25181030.5**

(22) Date of filing: **05.06.2025**

(51) International Patent Classification (IPC):
**G06F 30/23** (2020.01)      **G06F 30/25** (2020.01)
**G06F 30/28** (2020.01)

(52) Cooperative Patent Classification (CPC):
**G06F 30/23; G06F 30/25; G06F 30/28;**
G06F 2113/08

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **06.06.2024 US 202418735280**

(71) Applicant: **DASSAULT SYSTEMES AMERICAS
CORP.
Waltham, MA 02451 (US)**

(72) Inventors:
• **CHEN, Hudong
Waltham, 02451 (US)**
• **ZHANG, Raoyang
Waltham, 02451 (US)**

(74) Representative: **Fish & Richardson P.C.
Highlight Business Towers
Mies-van-der-Rohe-Straße 8
80807 München (DE)**

(54) **CONNECTING TWO DOMAINS WITH DIFFERENT RESOLUTIONS IN LATTICE BOLTZMANN METHOD WITH DOUBLE-SIDED SURFELS**

(57)    Systems and methods include simulating, in a digital representation of a simulation space, a fluid flow across a boundary including double-sided facets abutting a first region and a second region by: determining first particle distributions for first facets of the double-sided facets based on particle distributions of first resolution voxels in the first region and second particle distributions for second facets of the double-sided facets based on particles of the second resolution voxels in the second region; performing surface interactions on the double-sided facets; combining particle distributions from the second facets to the first facets based on the surface interactions; determining particle distributions to be advected from the first facets to the second facets based on the surface interactions; and advecting particle distributions from the first facets to the first resolution voxels and from the second facets to the second resolution voxels.

FIG. 1

## Description

### CROSS REFERENCE TO RELATED APPLICATIONS

This application claims the benefit of U.S. Patent Application No. 18/735,280, filed on June 6, 2024, which is incorporated herein by reference in its entirety.

### BACKGROUND

This description relates to simulating physical processes, e.g., fluid flow.

High Reynolds number flow has been simulated by generating discretized solutions of the Navier-Stokes differential equations by performing high-precision floating point arithmetic operations at each of many discrete spatial locations on variables representing the macroscopic physical quantities (e.g., density, temperature, flow velocity). Another approach replaces the differential equations with what is generally known as lattice gas (or cellular) automata, in which the macroscopic-level simulation provided by solving the Navier-Stokes equations is replaced by a microscopic-level model that performs operations on particles moving between sites on a lattice.

### SUMMARY

For a Lattice Boltzmann simulation of a physical process involving more than one mesh resolution (e.g., a variable resolution (VR) simulation) the two or more mesh resolutions are connected to communicate information from one region to another region. Conventionally, the regions of different resolutions have been connected based on overlapping lattice meshes. For example, the connection between two spatial lattice domains with different lattice resolutions is accomplished by overlapping volumetric regions of the two lattice domains.

The volumetric overlap based VR methods have relatively low computational cost, simple geometric weight construction, and exact conservation of mass, momentum, and energy (MME); however, as accuracy requirements increase for performing fluid flow simulations with finer structures, this conventional volumetric based VR formulation has reached its limitations. In particular, the overlapping volumetric domain presents not only a spatial uncertainty but also a misplacement of particles in the stream-wise flow distribution. Although it is a lesser issue for long wavelength flow properties, it is a fundamental challenge in precisely defining fluid dynamic properties and their spatial propagation at scales near the lattice spacing. For example, an aero-acoustic wave with a wavelength of a few lattice spacings can travel across such an overlapping domain. In some cases when a pressure or aero-acoustic wave travels across the overlapping domain boundary, the boundary can create an artificial wave reflection in the fluid domain.

This disclosure presents a surface based approach to connecting mesh regions having different resolutions. Two-dimensional surface elements (e.g., facets, surfels) form a boundary between the two regions. The surface elements are double sided with one side interfacing with a first region (e.g., a coarse region) and a second side interfacing with a second region (e.g., a fine region). Particle distributions are advected from neighboring voxels to the surface elements. Surface dynamics occur on the surface elements and particle distributions are propagated from the first side of the surface element to the second side of the surface element and vice versa. Particle distributions are then propagated from each side of the surface element to the neighboring voxels.

In an example implementation, a computer system for digitally simulating fluid flow in a three-dimensional computer aided design (CAD) model of a simulation space with a variable resolution mesh includes one or more processors; and a memory including a mesh preparation engine for generating and storing a digital representation of a simulation space, the digital representation including a three-dimensional CAD model of the simulation space including a mesh represented as a plurality of voxels including particles, the mesh including a first region including first resolution voxels and a second region including second resolution voxels, the first region and the second region abutting at a boundary including one or more double-sided facets, each double-sided facet including a first facet on a first side interfacing with one or more first resolution voxels and second facets on a second side opposite the first side, the second facets interfacing with second resolution voxels; and a simulation engine for reading, from the mesh preparation engine, the digital representation of the simulation space including the mesh, with the simulation engine storing instructions for simulating fluid flow using a simulation space with variable resolution, the instructions, when executed by the one or more processors, cause the one or more processors to perform operations including reading, from the mesh preparation engine, the digital representation of the simulation space including the three-dimensional CAD model of the simulation space including the mesh; simulating, in the digital representation of the simulation space, a fluid flow across the boundary by: determining one or more first particle distributions for the one or more first facets based on particle distributions of the first resolution voxels and second particle distributions for the second facets based on particles of the second resolution voxels; performing surface interactions on the one or more double-sided facets based on the one or more first particle distributions and the second particle distributions; combining, for the one or more double-sided facets, particle distributions from the second facets to the first facets based on the surface interactions; determining, for the one or more double-sided facets, particle distributions to be advected from the first facets to the second facets based on the surface interactions; and advecting the combined particle distributions from the one or more first facets to the first resolution voxels and the determined particle distributions from the second facets to the second resolution voxels.

In another example implementation, a method implemented by a data processing system for simulating fluid flow using a simulation space in a three-dimensional computer-aided design (CAD) model of a simulation space with a variable resolution mesh includes receiving, by a data processing system, a digital representation of a simulation space, the digital representation including a three-dimensional CAD model of the simulation space including a mesh represented as a plurality of voxels including particles, the mesh including a first region including first resolution voxels and a second region including second resolution voxels, the first region and the second region abutting at a boundary including one or more double-sided facets, each double-sided facet including a first facet on a first side interfacing with one or more first resolution voxels and second facets on a second side opposite the first side, the second facets interfacing with second resolution voxels; simulating, in the digital representation of the simulation space by the data processing system, a fluid flow across the boundary by: determining, by the data processing system, one or more first particle distributions for the one or more first facets based on particle distributions of the first resolution voxels and second particle distributions for the second facets based on particle distributions of the second resolution voxels; performing, by the data processing system, surface interactions on the one or more double-sided facets based on the one or more first particle distributions and the second particle distributions; combining, by the data processing system for the one or more double-sided facets, particle distributions from the second facets to the first facets based on the surface interactions; determining, by the data processing system for the one or more double-sided facets, particle distributions to be advected from the first facets to the second facets based on the surface interactions; and advecting, by the data processing system, the combined particle distributions from the one or more first facets to the first resolution voxels and the determined particle distributions from the second facets to the second resolution voxels.

In another example implementation, one or more non-transitory machine-readable storage devices storing instructions for digitally simulating fluid flow in a three-dimensional computer aided design (CAD) model of a simulation space with a variable resolution mesh, the instructions being executable by one or more processors, to cause performance of operations including receiving a digital representation of a simulation space, the digital representation including a three-dimensional CAD model of the simulation space including a mesh represented as a plurality of voxels including particles, the mesh including a first region including first resolution voxels and a second region including second resolution voxels, the first region and the second region abutting at a boundary including one or more double-sided facets, each double-sided facet including a first facet on a first side interfacing with one or more first resolution voxels and second facets on a second side opposite the first side, the second facets interfacing with second resolution voxels; simulating, in the digital representation of the simulation space, a fluid flow across the boundary by: determining one or more first particle distributions for the one or more first facets based on particle distributions of the first resolution voxels and second particle distributions for the second facets based on particles of the second resolution voxels; performing surface interactions on the one or more double-sided facets based on the one or more first particle distributions and the second particle distributions; combining, for the one or more double-sided facets, particle distributions from the second facets to the first facets based on the surface interactions; determining, for the one or more double-sided facets, particle distributions to be advected from the first facets to the second facets based on the surface interactions; and advecting the combined particle distributions from the one or more first facets to the first resolution voxels and the determined particle distributions from the second facets to the second resolution voxels.

An aspect combinable with one, some, or all of the example implementations includes advecting particle distributions from the one or more first facets to one or more first facets and from the second facets to second facets.

In another aspect combinable with one, some, or all of the previous aspects, performing the surface interactions includes performing surface interactions in each second facet for a second resolution time step.

In another aspect combinable with one, some, or all of the previous aspects, combining the particle distributions from the second facets to the one or more first facets includes combining particle distributions from the second facets for multiple second resolution time steps to the one or more first facets for a first resolution time step.

In another aspect combinable with one, some, or all of the previous aspects, the boundary is constrained to be located at boundaries of voxels of the first region and the second region.

In another aspect combinable with one, some, or all of the previous aspects, simulating the fluid flow preserves mass, momentum, and energy fluxes across the boundary.

Another aspect combinable with one, some, or all of the previous aspects includes determining particle distributions associated with parallel lattice base-vector directions by sampling particle distributions in the first region and in the second region; and determining mass, momentum, and energy conservation based on the particle distributions associated with the parallel lattice base-vector directions and the surface interactions.

In another aspect combinable with one, some, or all of the previous aspects, gathering the first particle distributions and the second particle distributions is based on lattice base-vectors associated with the first resolution voxels and the second resolution voxels.

In another aspect combinable with one, some, or all of the previous aspects, combining the particle distributions from the second facets to the one or more first facets includes combining the particle distributions based on lattice base-vectors associated with the second facets.

Another aspect combinable with one, some, or all of the previous aspects includes storing, in the memory, the one or more first particle distributions for the one or more first facets based on the particle distributions of the first resolution voxels and the second particle distributions for the second facets based on the particles of the second resolution voxels; storing, in the memory, results of the surface interactions performed on the one or more double-sided facets based on the one or more first particle distributions and the second particle distributions; storing, in the memory, the particle distributions for the one or more double-sided facets combined from the second facets to the first facets based on the surface interactions; storing, in the memory, the particle distributions to be advected from the first facets to the second facets based on the surface interactions; and storing, in the memory, the particle distributions advected from the one or more first facets to the first resolution voxels and from the second facets to the second resolution voxels.

One or more of the above aspects may provide one or more of the advantages disclosed herein. This approach improves the accuracy of fluid flow simulations that involving arbitrarily complex geometry by using precise spatial locations of particle distributions across resolution boundaries in a simulation space including meshes or lattice-structures that have multiple resolutions. The precise spatial location definitions are provided by double-sided surface elements located at the boundary between the regions with different resolution. Each side of the double-sided surface element interfaces with only one resolution of voxels, and particles are advected from one side of the double-sided surface element to the opposite side to advect the particles between the regions with different resolutions.

This approach reduces the computational complexity of the simulation by constraining the double-sided surface elements to be aligned with edges of voxels in the mesh or lattice-structure thereby reducing the computational resources required for simulating a fluid flow as compared with surface based methods with arbitrarily oriented surface elements. This reduction in computational complexity conserves computing resources because less processing power is needed to perform the computation, relative to an amount of processing power needed for more complex computations. This reduction in computational complexity also increases the speed at which a processing device performs the computation. Generally, processing power includes an ability of a computer (or processing device) to process data. This approach also reduces computational complexity for variable resolution mesh boundaries that interact with solid walls of the simulation space by reducing interactions of surface elements representing the solid walls with voxels across the variable resolution mesh boundary. In this approach, the surface elements representing the solid walls interact only with voxels and surface elements of a single resolution. This approach also improves the accuracy of fluid flow simulations by preserving exact mass and momentum conservation and exact flux definitions between regions of meshes or lattice structures with different resolutions.

Other features and advantages of the invention will be apparent from the following detailed description of the preferred embodiments, and from the claims.

## BRIEF DESCRIPTION OF THE DRAWINGS

FIG. 1 depicts a system for simulation of fluid flows, which includes a novel surface dynamics conversion.

FIG. 2 depicts a flow chart showing operations for formulation of a Lattice Boltzmann Model (LBM) simulation.

FIGS. 3 and 4 illustrate velocity components of two LBMs represented in Euclidean space (prior art).

FIG. 5 is a flow chart of a procedure followed by a physical process simulation system using corrected computer-aided design (CAD) drawings.

FIG. 6 is a perspective view of a microblock (prior art).

FIGS. 7A - 7B are illustrations of lattice structures used by the system of FIG. 1 (prior art).

FIGS. 8 and 9 illustrate variable resolution techniques (prior art).

FIG. 10 illustrates movement of particles (prior art).

FIG. 11 illustrates regions affected by a facet of a surface (prior art).

FIG. 12 illustrates movement of particles from a surface to a surface (prior art).

FIG. 13 is a flow chart of a procedure for performing surface dynamics.

FIG. 14 illustrates a boundary in a lattice structure formed by double-sided surface elements.

FIG. 15 illustrates a lattice aligned boundary and regions of the lattice affected by a double-sided surface element.

FIG. 16 is a flow chart of a method of simulating a fluid flow in a variable resolution mesh using double-sided surface elements.

The details of one or more embodiments of the invention are set forth in the accompanying drawings and the description below. Other features, objects, and advantages of the invention are apparent from the description and drawings, and from the claims.

## DESCRIPTION

One method for simulating fluid flows is the so-called Lattice Boltzmann Model (LBM). In an LBM-based physical process simulation system, fluid flow is represented by distribution function values, evaluated at a set of discrete velocities using the well-known Lattice Boltzmann equation that describes the time-evolution of the distribution function. The distribution function involves two processes, a streaming process and a collision process.

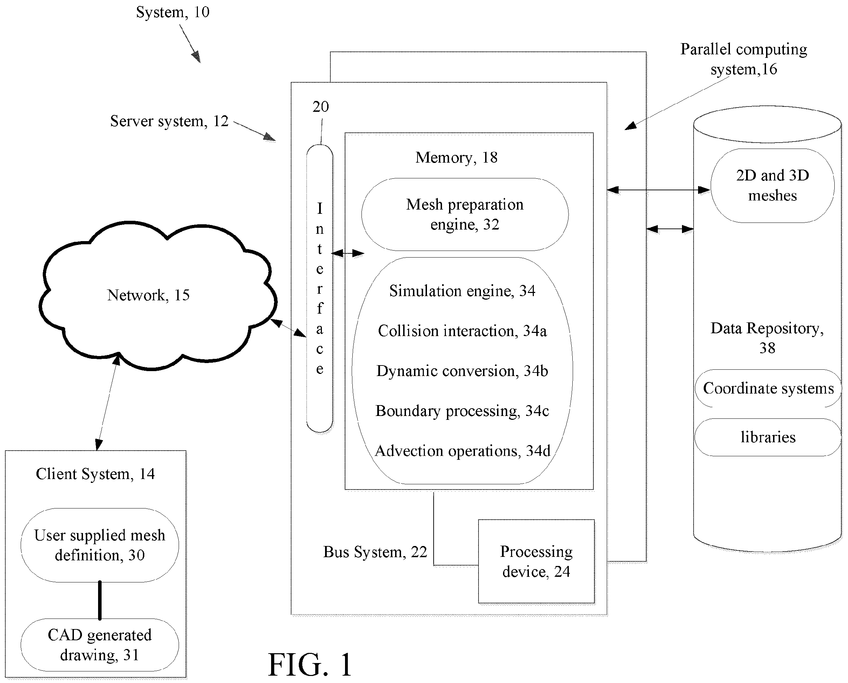

Referring to FIG. 1, a system 10 that executes a Lattice Boltzmann (LB) based simulation, including a variable resolution mesh, is shown. The system 10 in this implementation is based on a client-server or cloud-based architecture and includes a server system 12 implemented as a massively parallel computing system 16 (stand alone or cloud-based) and a client system 14 coupled via a network 15. The server system 12 includes memory 18, a bus system 22, interfaces 20 (e.g., user interfaces/network interfaces/display or monitor interfaces, etc.) and a processing device 24. In memory 18 are a mesh preparation engine 32 and a simulation engine 34.

While FIG. 1 shows mesh preparation engine 32 in memory 18, the mesh preparation engine can be a third-party application that is executed on a different system than server 12. Whether mesh preparation engine 32 executes in memory 18 or is executed on a different system than server 12, mesh preparation engine 32 receives a user-supplied mesh definition 30 based on CAD generated drawings 31, and then prepares a mesh and sends (and/or stores) the prepared mesh to simulation engine 34.

Simulation engine 34 includes collision interaction module 34a, which includes surface dynamics conversion 34b, boundary processing module 34c, and advection operations 34d. System 10 accesses data repository 38, which stores 2D and/or 3D meshes (Cartesian and/or curvilinear), coordinate systems, and libraries.

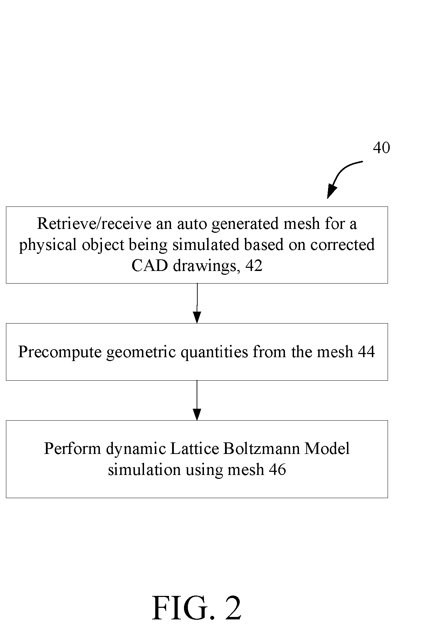

Referring to FIG. 2, a process 40 for simulating fluid flow about a representation of a physical object is shown. In the example that will be discussed herein, the physical object is an airfoil. The use of an airfoil is merely illustrative, however, as the physical object can be of any shape and, in particular, can have planar and/or curved surface(s). Process 40 receives 42, e.g., from client system 14 or retrieves from data repository 38, a mesh (or grid) for the physical object being simulated. In other embodiments, either an external system or the server 12 based on user input, generates the mesh for the physical object being simulated. The process precomputes 44 geometric quantities from the retrieved mesh and performs dynamic Lattice Boltzmann Model simulation 46 using the precomputed geometric quantities corresponding to the retrieved mesh. Lattice Boltzmann Model simulation includes the simulation 46 of evolution of particle distribution that includes the surface dynamics conversion, boundary modeling, and advection of particles to a next cell in the LBM mesh. The particle distribution includes a digital representation of the digital particles in the voxels in the LBM mesh.

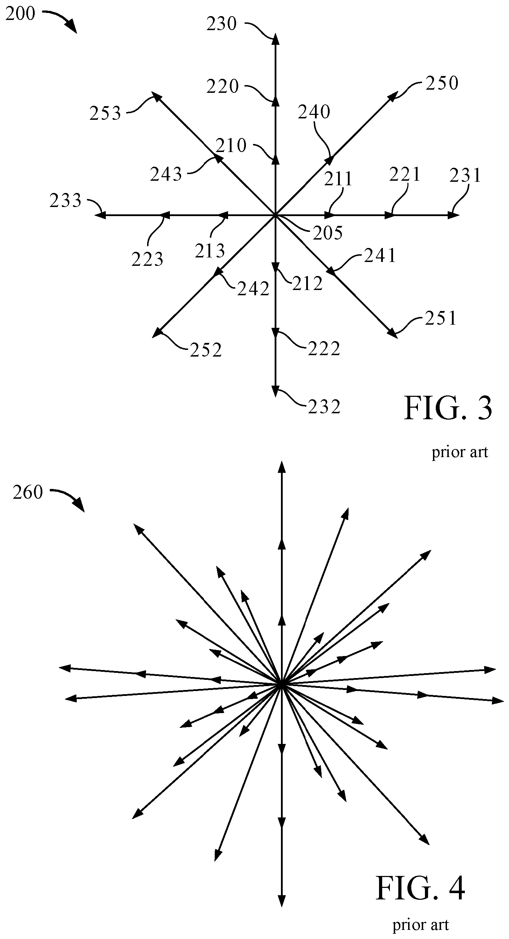

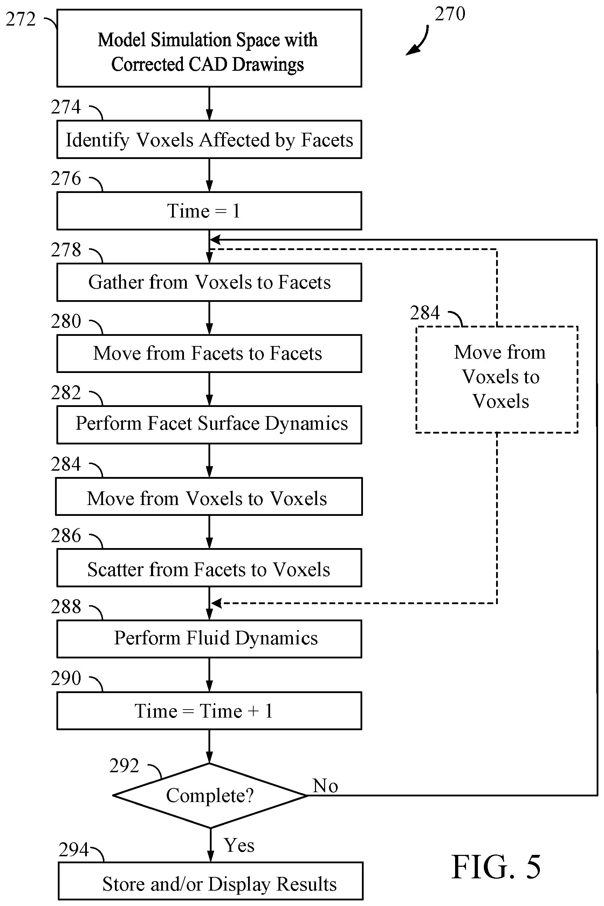

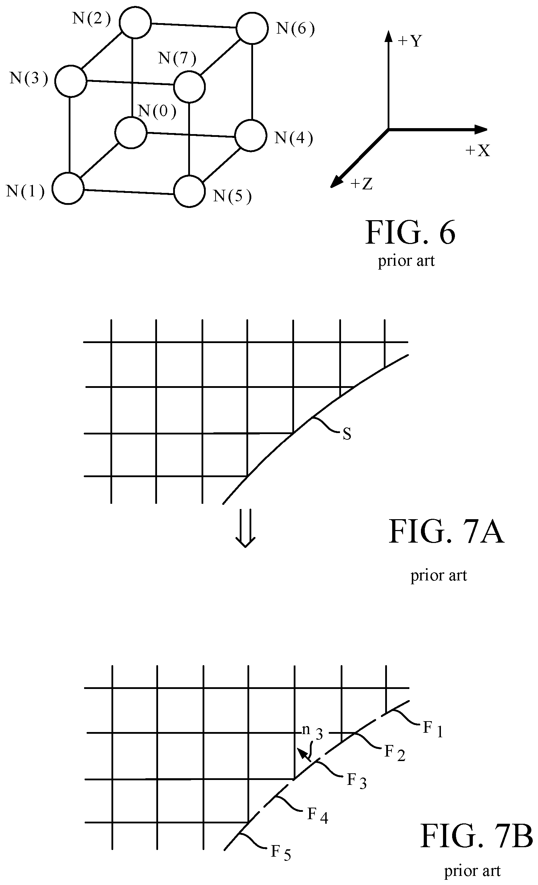

In the procedure discussed in FIG. 5 below, a flow simulation process is described using CAD drawings with the identified void space to configure a simulation space. In FIGS. 3 and 4 that precede and FIGS. 6, 7A, 7B, 8, 9, 10, 11 and 12, each of these figures are labeled as prior art because these figures appear in U.S. Patent 5,848,260 (the '260 patent) or U.S. Patent 11,847,391 (the '391 patent), both of which are hereby incorporated in their entirety.

However, the figures as they appear in the above patent do not take into consideration any modifications that would be made to a flow simulation using variable resolution meshes with a boundary between regions of different resolutions in the mesh formed by double-sided surface elements because that process described herein is not described in the above referenced patent.

## Model Simulation Space

In an LBM-based physical process simulation system, fluid flow is represented by the distribution function values evaluated at a set of discrete velocities. The dynamics of the distribution function is governed by the Lattice Boltzmann equation which relates the change of the distribution due to the so-called "streaming process" to changes in the distribution function due to the "collision process" The streaming process is when a pocket of fluid starts out at a mesh location, and then moves along one of the plural velocity vectors to the next mesh location. At that point, the "collision factor," i.e., the effect of nearby pockets of fluid on the starting pocket of fluid, is calculated. The fluid can only move to another mesh location, so the proper choice of the velocity vectors is necessary so that all of the components of all of the velocities are multiples of a common speed. The collision process uses a "collision operator" to represent the change of the distribution function due to the collisions among the pockets of fluids. The particular form of the collision operator is of the Bhatnagar, Gross and Krook (BGK) operator. The collision operator forces the distribution function to go to prescribed values.

The BGK operator is constructed according to the physical argument that, no matter what the details of the collisions, the distribution function approaches a well-defined local equilibrium via collisions. according to a characteristic relaxation time to reach equilibrium via collisions. Dealing with particles (e.g., atoms or molecules), the relaxation time is typically taken as a constant.

From this simulation, conventional fluid variables, such as mass and fluid velocity , are obtained based on simple summations of products of the distribution. Due to symmetry considerations, the set of velocity values are selected in such a way that they form certain lattice structures when spanned in the configuration space. The dynamics of such discrete systems obey the LBE, where the collision operator usually takes the BGK form as described above. By proper choice of the equilibrium distribution forms, it can be theoretically shown that the Lattice Boltzmann equation gives rise to correct hydrodynamics and thermo-hydrodynamics. That is, the hydrodynamic moments derived from the distribution function obey the Navier-Stokes equations in the macroscopic limit.

The collective values of the lattice velocities and the associated weights define an LBM. The LBM can be implemented, efficiently on scalable computer platforms and run with great robustness for time unsteady flows and complex boundary conditions.

A standard technique of obtaining the macroscopic equation of motion for a fluid system from the Boltzmann equation is the Chapman-Enskog method in which successive approximations of the full Boltzmann equation are taken. In a fluid system, a small disturbance of the density travels at the speed of sound. In a gas system, the speed of sound is generally determined by the temperature. The importance of the effect of compressibility in a flow is measured by the ratio of the characteristic velocity and the sound speed, which is known as the Mach number.

A general discussion of an LBM-based simulation system is provided below that includes the dynamic conversion 34b to conduct fluid flow simulations. For a further explanation of LBM-based physical process simulation systems, the reader is referred to the '260 patent.

Referring to FIG. 3, a first model (2D-1) 200 is a two-dimensional model that includes 21 velocities. Of these 21 velocities, one (205) represents particles that are not moving; three sets of four velocities represent particles that are moving at either a normalized speed (r) (210-213), twice the normalized speed (2r) (220-223), or three times the normalized speed (3r) (230-233) in either the positive or negative direction along either the $x$ or $y$ axis of the lattice; and two sets of four velocities represent particles that are moving at the normalized speed ($r$) (240-243) or twice the normalized speed *(2r)* (250-253) relative to both of the $x$ and $y$ lattice axes.

Referring to FIG. 4, illustrated is a second model (3D-1) 260 - a three-dimensional model that includes 39 velocities where each velocity is represented by one of the arrowheads of FIG. 4. Of these 39 velocities, one represents particles that are not moving; three sets of six velocities represent particles that are moving at either a normalized speed (r), twice the normalized speed (2r), or three times the normalized speed (3r) in either the positive or negative direction along the $x$, $y$ or $z$ axis of the lattice; eight represent particles that are moving at the normalized speed ($r$) relative to all three of the $x, y, z$ lattice axes; and twelve represent particles that are moving at twice the normalized speed (2r) relative to two of the $x, y, z$ lattice axes.

More complex models, such as a 3D-2 model, which includes 101 velocities, and a 2D-2 model which includes 37 velocities may also be used. For the three-dimensional model 3D-2, of the 101 velocities, one represents particles that are not moving (Group 1); three sets of six velocities represent particles that are moving at either a normalized speed ($r$), twice the normalized speed (2r), or three times the normalized speed (3r) in either the positive or negative direction along the $x$, $y$ or $z$ axis of the lattice (Groups 2, 4, and 7); three sets of eight represent particles that are moving at the normalized speed ($r$), twice the normalized speed (2r), or three times the normalized speed (3r) relative to all three of the $x, y, z$ lattice axes (Groups 3, 8, and 10); twelve represent particles that are moving at twice the normalized speed (2r) relative to two of the $x, y, z$ lattice axes (Group 6); twenty four represent particles that are moving at the normalized speed ($r$) and twice the normalized speed (2r) relative to two of the $x, y, z$ lattice axes, and not moving relative to the remaining axis (Group 5); and twenty four represent particles that are moving at the normalized speed ($r$) relative to two of the $x, y, z$ lattice axes and three times the normalized speed (3r) relative to the remaining axis (Group 9).

For the two-dimensional model 2D-2, of the 37 velocities, one represents particles that are not moving (Group 1); three sets of four velocities represent particles that are moving at either a normalized speed ($r$), twice the normalized speed (2r), or three times the normalized speed (3r) in either the positive or negative direction along either the $x$ or $y$ axis of the lattice (Groups 2, 4, and 7); two sets of four velocities represent particles that are moving at the normalized speed ($r$) or twice the normalized speed (2r) relative to both of the $x$ and $y$ lattice axes; eight velocities represent particles that are moving at the normalized speed ($r$) relative to one of the $x$ and $y$ lattice axes and twice the normalized speed (2r) relative to the other axis; and eight velocities represent particles that are moving at the normalized speed ($r$) relative to one of the $x$ and $y$ lattice axes and three times the normalized speed (3r) relative to the other axis.

The LB models described above provide a specific class of efficient and robust discrete velocity kinetic models for numerical simulations of flows in both two-and three-dimensions. A model of this kind includes a particular set of discrete velocities and weights associated with those velocities. The velocities coincide with grid points of Cartesian coordinates in velocity space which facilitates accurate and efficient implementation of discrete velocity models, particularly the kind known as the Lattice Boltzmann models. Using such models, flows can be simulated with high fidelity.

Referring to FIG. 5, a physical process simulation system that operates according to a procedure 270 to simulate a physical process such as fluid flow is described. Prior to the flow simulation, a simulation space is modeled (272) using CAD drawings as discussed above, as a collection of voxels. The simulation space is generated using a computer-aided-design (CAD) program and the gap correction processing of the CAD generated drawings. For example, a CAD program could be used to draw an air foil positioned in a wind tunnel.

The resolution of the lattice may be selected based on the Reynolds number of the system being simulated. The Reynolds number is related to the viscosity of the flow, the characteristic length of an object in the flow, and the characteristic velocity of the flow.

The characteristic length of an object represents large scale features of the object. For example, if flow around a micro-device were being simulated, the height of the micro-device might be considered to be the characteristic length. When flow around small regions of an object (e.g., the side mirror of an automobile) is of interest, the resolution of the simulation may be increased, or areas of increased resolution may be employed around the regions of interest. The dimensions of the voxels decrease as the resolution of the lattice increases.

The state space is represented as the distribution function of particles or particles, per unit volume in a given state at a lattice site denoted by a spatial vector at a given time. The number of states is determined by the number of possible velocity vectors within each energy level. The velocity vectors are integer linear speeds in a space having three dimensions: $x$, $y$, and $z$. The number of states is increased for multiple-species simulations. Each state represents a different velocity vector at a specific energy level (i.e., energy level zero, one or two). The velocity of each state is indicated with its "speed" in each of the three dimensions.

The energy level zero state represents stopped particles that are not moving in any dimension, i.e., the speed of the particles in each dimension is zero. Energy level one states represents particles having a $\pm 1$ speed in one of the three dimensions and a zero speed in the other two dimensions. Energy level two states represent particles having either a $\pm 1$ speed in all three dimensions, or a $\pm 2$ speed in one of the three dimensions and a zero speed in the other two dimensions.

Generating all of the possible permutations of the three energy levels gives a total of 39 possible states (one energy zero state, 6 energy one states, 8 energy three states, 6 energy four states, 12 energy eight states and 6 energy nine states.). Each voxel (i.e., each lattice site) is represented by a state vector. The state vector completely defines the status of the voxel and includes 39 entries. The 39 entries correspond to the one energy zero state, 6 energy one states, 8 energy three states, 6 energy four states, 12 energy eight states and 6 energy nine states. By using this velocity set, the system can produce Maxwell-Boltzmann statistics for an achieved equilibrium state vector.

For processing efficiency, the voxels are grouped in 2x2x2 volumes called microblocks. The microblocks are organized to permit parallel processing of the voxels and to minimize the overhead associated with the data structure.

A microblock is illustrated in FIG. 6. The voxels are represented at the corners of the microblock.

Referring to FIGS. 7A and 7B, a surface S (FIG. 7A) is represented in the simulation space (FIG. 7B) as a collection of facets $F_\alpha$, where $\alpha$ is an index that enumerates a particular facet. A facet is not restricted to the voxel boundaries but is typically sized on the order of or is slightly smaller than the size of the voxels adjacent to the facet so that the facet affects a relatively small number of voxels. Properties are assigned to the facets for the purpose of implementing surface dynamics. In particular, each facet $F_\alpha$ has a unit normal ($n_\alpha$), a surface area ($A_\alpha$), a center location ($x_\alpha$), and a facet distribution function ($f_i(\alpha)$) that describes the surface dynamic properties of the facet. The total energy distribution function is treated in the same way as the flow distribution for facet and voxel interaction.

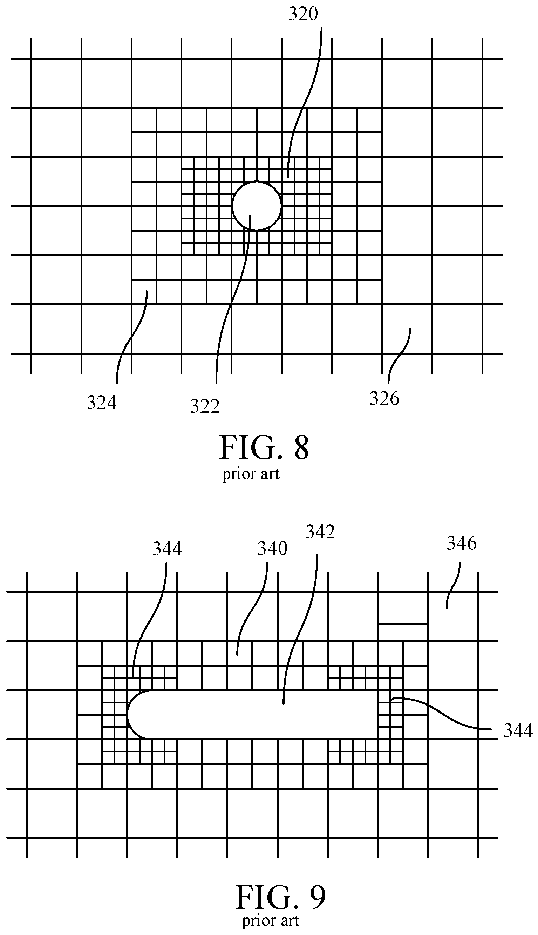

Referring to FIG. 8, different levels of resolution may be used in different regions of the simulation space to improve processing efficiency. Typically, the region 320 around an object 322 is of the most interest and is therefore simulated with the highest resolution. Because the effect of viscosity decreases with distance from the object, decreasing levels of resolution (i.e., expanded voxel volumes) are employed to simulate regions 324, 326 that are spaced at increasing distances from the object 322.

Similarly, as illustrated in FIG. 9, a lower level of resolution may be used to simulate a region 340 around less significant features of an object 342 while the highest level of resolution is used to simulate regions 344 around the most significant features (e.g., the leading and trailing surfaces) of the object 342. Outlying regions 346 are simulated using the lowest level of resolution and the largest voxels.

## C. Identify Voxels Affected By Facets

Referring again to FIG. 5, once the simulation space has been modeled (272), voxels affected by one or more facets are identified (274). Voxels may be affected by facets in a number of ways. First, a voxel that is intersected by one or more facets is affected in that the voxel has a reduced volume relative to non-intersected voxels. This occurs because a facet, and material underlying the surface represented by the facet, occupies a portion of the voxel. A fractional factor indicates the portion of the voxel that is unaffected by the facet (i.e., the portion that can be occupied by a fluid or other materials for which flow is being simulated). For non-intersected voxels the fractional factor equals one.

Voxels that interact with one or more facets by transferring particles to the facet or receiving particles from the facet are also identified as voxels affected by the facets. All voxels that are intersected by a facet will include at least one state that receives particles from the facet and at least one state that transfers particles to the facet. In most cases, additional voxels also will include such states.

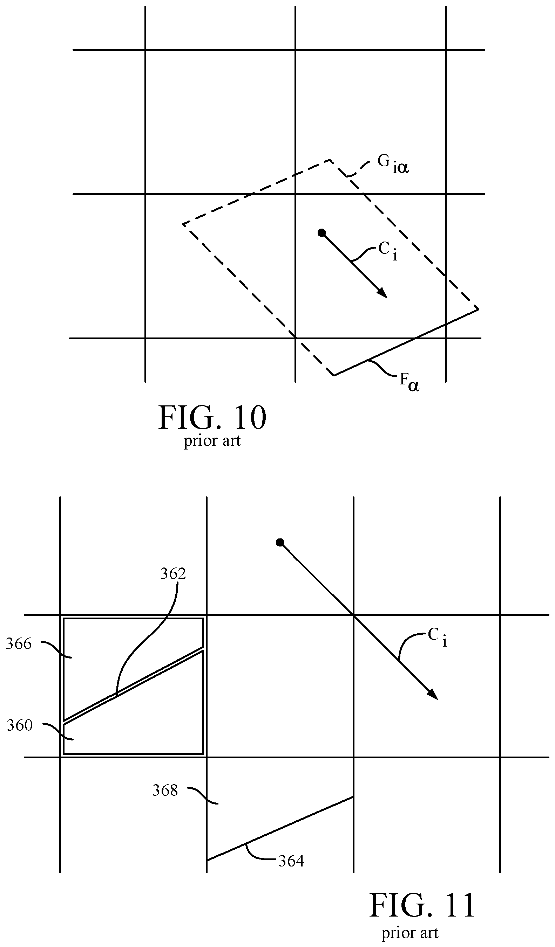

Referring to FIG. 10, for each state $i$ having a non-zero velocity vector $c_i$, a facet $F_\alpha$ receives particles from, or transfers particles to, a region defined by a parallelepiped $G_{i\alpha}$ having a height defined by the magnitude of the vector dot product of the velocity vector $c_i$ and the unit normal $n_\alpha$ of the facet and a base defined by the surface area $A_\alpha$ of the facet so that the volume $V_{i\alpha}$ of the parallelepiped $G_{i\alpha}$ equals the base times the height.

The facet $F_\alpha$ receives particles from the volume $V_{i\alpha}$ when the velocity vector of the state is directed toward the facet, and transfers particles to the region when the velocity vector of the state is directed away from the facet. As will be discussed below, this relationship is modified when another facet occupies a portion of the parallelepiped $G_{i\alpha}$, a condition that could occur in the vicinity of non-convex features of a surface such as interior corners.

The parallelepiped $G_{i\alpha}$ of a facet $F_\alpha$ may overlap portions or all of multiple voxels. The number of voxels or portions thereof is dependent on the size of the facet relative to the size of the voxels, the energy of the state, and the orientation of the facet relative to the lattice structure. The number of affected voxels increases with the size of the facet. Accordingly, the size of the facet, as noted above, is typically selected to be on the order of or smaller than the size of the voxels located near the facet.

The flux of particles for a given state that move between a voxel and a facet $F_\alpha$ equals the density of the particles of the state in the voxel multiplied by the volume of the region of overlap with the voxel.

When the parallelepiped $G_{i\alpha}$ is intersected by one or more facets, the volume of the parallelepiped $V_{i\alpha}$ is equal to the summation of the volumes associated with each of the voxels overlapped by $G_{i\alpha}$ and the summation of the volumes associated with all of the facets that intersect $G_{i\alpha}$.

## D. Perform Simulation

Once the voxels that are affected by one or more facets are identified (274), a timer is initialized to begin the simulation (276). During each time increment of the simulation, movement of particles from voxel to voxel is simulated by an advection stage (278-286) that accounts for interactions of the particles with surface facets. Next, a collision stage (288) simulates the interaction of particles within each voxel. Thereafter, the timer is incremented (290). If the incremented timer does not indicate that the simulation is complete (292), the advection and collision stages (278-288) are repeated. If the incremented timer indicates that the simulation is complete (292), results of the simulation are stored and/or displayed (294).

### 1. Boundary Conditions For Surface

To correctly simulate interactions with a surface, each facet meets four boundary conditions. First, the combined mass of particles received by a facet equals the combined mass of particles transferred by the facet (i.e., the net mass flux to the facet equals zero). Second, the combined energy of particles received by a facet equals the combined energy of particles transferred by the facet (i.e., the net energy flux to the facet equals zero). These two conditions may be satisfied by requiring the net mass flux at each energy level (i.e., energy levels one and two) to equal zero.

The other two boundary conditions are related to the net momentum of particles interacting with a facet. For a surface with no skin friction, referred to herein as a slip surface, the net tangential momentum flux equals zero and the net normal momentum flux equals the local pressure at the facet. Thus, the components of the combined, received, and transferred momentums that are perpendicular to the normal $n_\alpha$ of the facet (i.e., the tangential components) are equal, while the difference between the components of the combined, received, and transferred momentums that are parallel to the normal $n_\alpha$ of the facet (i.e., the normal components) equals the local pressure at the facet. For non-slip surfaces, friction of the surface reduces the combined tangential momentum of particles transferred by the facet relative to the combined tangential momentum of particles received by the facet by a factor that is related to the amount of friction.

### 2. Gather From Voxels to Facets

Simulating interaction between particles and a surface, particles are gathered from the voxels and provided to the facets (278). As noted above, the flux of particles between a voxel and a facet for a given state is related to the overlap of the parallelepiped of the facet and the voxel for the given state. Only voxels for which parallelepiped has a non-zero value are summed. As noted above, the size of the facets is selected so that the parallelepiped volumes for the facets have a non-zero value for only a small number of voxels. The volume of the parallelepipeds and the flux of particles can have non-integer values, and thus a data processing system stores and processes these quantities as real numbers.

### 3. Move From Facet to Facet

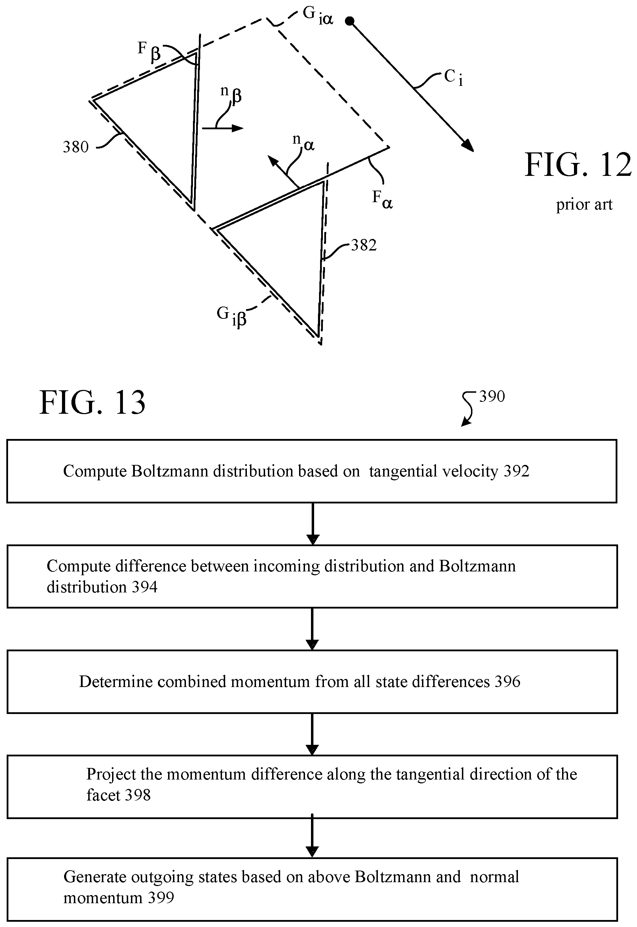

Next, particles are moved between facets (280). If the parallelepiped $G_{i\alpha}$ for an incoming state of a facet $F_\alpha$ is intersected by another facet $F_\beta$, then a portion of the particles for the incoming state received by the facet $F_\alpha$ will come from the facet $F_\beta$. In particular, facet $F_\alpha$ will receive a portion of the particles for the given state produced by facet $F_\beta$ during the previous time increment. This relationship is illustrated in FIG. 12, where a portion 380 of the parallelepiped $G_{i\alpha}$ that is intersected by facet

$F_\beta$ equals a portion 382 of the parallelepiped $G_{i\beta}$ that is intersected by facet $F_\alpha$. For each state directed toward a facet $F_\alpha$, the number of particles provided to the facet $F_\alpha$ by the other facets is equal to the flux of particles from the other facets from the previous time step multiplied by the ratio of the overlapping volume between parallelepipeds of the other facets and the facet $F_\alpha$ for a given state and the total volume of the parallelepiped for the facet $F_\alpha$. for that state.:

The total flux of particles for the given state into the facet $F_\alpha$ is equal to the sum of the particles from all of the voxels overlapping the parallelepipeds of the facet and the sum of the fluxes from all of the facets that have parallelepiped volumes overlapping with the parallelepiped volumes of the facet $F_\alpha$. The state vector for the facet, also referred to as a facet distribution function, has a number of entries corresponding to the number entries of the voxel states vectors, where the number of entries is the number of discrete lattice speeds in the LBM. The input states of the facet distribution function are set equal to the flux of particles into those states divided by the volume $V_{i\alpha}$ .

The facet distribution function is a simulation tool for generating the output flux from a facet and is not necessarily representative of actual particles. To generate an accurate output flux, values are assigned to the other states of the distribution function. Outward states are populated using the technique described above for populating the inward states. In an alternative approach, the flux from states other than incoming states may be generated using values of the outward flux from the previous time step.

For parallel states (e.g., states with velocities parallel to the facet), the volume of the associated parallelepiped is zero. The facet distribution function for parallel states is determined as the limit of the facet distribution function as the volume of the parallelepiped and any overlapping parallelepipeds approach zero. The values of states having zero velocity (i.e., rest states and states (0, 0, 0, 2) and (0, 0, 0, -2)) are initialized at the beginning of the simulation based on initial conditions for temperature and pressure. These values are then adjusted over time.

## 4. Perform Facet Surface Dynamics

Next, surface dynamics are performed 282 for each facet to satisfy the boundary conditions. A procedure 390 for performing surface dynamics for a facet is illustrated in FIG. 13.

The velocity and densities are sampled from the voxel to the facet $F_\alpha$, during the gather step 278 (FIG. 5). The velocity is then projected along the surface. The Boltzmann Equilibrium distribution is computed (392) based on the sampled density and projected velocity, and the density and velocity are scaled to satisfy the constraints. The resulting density and velocity are then used to compute the new Boltzmann Equilibrium distribution (392). The difference between the incoming distribution and the new Boltzmann distribution determined (394), and the combined momentum difference between all incoming states and the facet's corresponding Boltzmann distribution (396) are computed.

The momentum difference is projected along the tangential direction of the facet (398). From the momentum difference and the Boltzmann distribution, the outgoing flux for the facet is computed to satisfy the perfect slip boundary condition (399), by satisfying zero tangential flux.

To account for skin friction and other factors, the outgoing flux distribution can be augmented with a skin friction component based on a product of the skin friction coefficient of the surface and a difference of the equilibrium portions of the outgoing and incoming particle fluxes. A more detailed description of applying skin friction and correction to different energy levels of lattice required for perfect mass and energy conservations are presented in the '260 patent and the '391 patent.

## 5. Move From Voxels to Voxels

Referring again to FIG. 5, particles are moved between voxels along the three-dimensional rectilinear lattice (284). This voxel to voxel movement is the only movement operation performed on voxels that do not interact with the facets (i.e., voxels that are not located near a surface). In typical simulations, voxels that are not located near enough to a surface to interact with the surface constitute a large majority of the voxels.

Each of the separate states represents particles moving along the lattice with integer speeds in each of the three dimensions: $x$, $y$, and $z$. The integer speeds include: 0, $\pm 1$, and $\pm 2$. The sign of the speed indicates the direction in which a particle is moving along the corresponding axis.

For voxels that do not interact with a surface, the move operation is computationally quite simple. The entire population of a state is moved from its current voxel to its destination voxel during every time increment. At the same time, the particles of the destination voxel are moved from that voxel to their own destination voxels. For example, an energy level 1 particle that is moving in the +1$x$ and +1$y$ direction (1, 0, 0) is moved from its current voxel to one that is +1 over in the $x$ direction and 0 for other direction. The particle ends up at its destination voxel with the same state it had before the move (1,0,0). Interactions within the voxel will likely change the particle count for that state based on local interactions with other particles and surfaces. If not, the particle will continue to move along the lattice at the same speed and direction.

The move operation becomes slightly more complicated for voxels that interact with one or more surfaces. This can result in one or more fractional particles being transferred to a facet. Transfer of such fractional particles to a facet, results in fractional particles remaining in the voxels. These fractional particles are transferred to a voxel occupied by the facet.

Referring to FIG. 11, when a portion 360 of the particles of a given state for a voxel 362 is moved to a facet 364 (278), the remaining portion 366 is moved to a voxel 368 in which the facet 364 is located and from which particles of the state are directed to the facet 364. Thus, if the state population equaled 25 and the volume of the parallelepiped overlapped with the voxel equaled 0.25 (i.e., a quarter of the voxel intersects the parallelepiped), then 6.25 particles would be moved to the facet 364 and 18.75 particles would be moved to the voxel 368 occupied by the facet 364. Because multiple facets could intersect a single voxel, the number of particles of a given state transferred to a voxel occupied by one or more facets is the related to the fraction of the volume of the voxel not overlapped by parallelepipeds of the intersecting facets (e.g., the number of particles transferred to the voxel equals the total number of incoming particles from the source voxel multiplied by the fraction of the voxel not overlapped by parallelepipeds of the intersecting facets)..

6. Scatter From Facets to Voxels

Next, the outgoing particles from each facet are scattered to the voxels (286). Essentially, this scatter is the reverse of the gather by which particles were moved from the voxels to the facets. The number of particles of a given state that move from a facet to a voxel is proportional to the outgoing flux of particles from the facet multiplied by the ratio of the parallelepiped volume overlapping the voxel to the total parallelepiped volume. A proportionality factor accounting for the volume reduction of partial voxels can also be included. For each state, the total number of particles directed from the facets to a voxel is determined based on the sum of the particles moving from each facet to that voxel.

After scattering particles from the facets to the voxels, combining them with particles that have advected in from surrounding voxels, and integerizing the result, it is possible that certain directions in certain voxels may either underflow (become negative) or overflow (exceed 255 in an eight-bit implementation). This would result in either a gain or loss in mass, momentum and energy after these quantities are truncated to fit in the allowed range of values. To protect against such occurrences, the mass, momentum, and energy that are out of bounds are accumulated prior to truncation of the offending state. For the energy to which the state belongs, an amount of mass equal to the value gained (due to underflow) or lost (due to overflow) is added back to randomly (or sequentially) selected states having the same energy and that are not themselves subject to overflow or underflow. The additional momentum resulting from this addition of mass and energy is accumulated and added to the momentum from the truncation. By only adding mass to the same energy states, both mass and energy are corrected when the mass counter reaches zero. Finally, the momentum is corrected using pushing/pulling techniques until the momentum accumulator is returned to zero.

7. Perform Fluid Dynamics

Fluid dynamics are performed (288) FIG. 5. This may be referred to as microdynamics or intravoxel operations. Similarly, the advection procedure may be referred to as intervoxel operations. The microdynamics operations described below may also be used to collide particles at a facet to produce a Boltzmann distribution.
The fluid dynamics is ensured in the Lattice Boltzmann equation models by a particular collision operator known as the BGK collision model. This collision model mimics the dynamics of the distribution in a real fluid system. After the advection step, the conserved quantities of a fluid system, specifically the density, momentum and the energy are obtained from the distribution function. From these quantities, the equilibrium distribution function can be fully specified. The choice of the velocity vector set and the weights, together with the Lattice Boltzmann equation ensures that the macroscopic behavior obeys the correct hydrodynamic equation.

**Variable Resolution**

Variable resolution can also be employed and uses voxels of different sizes, e.g., coarse voxels and fine voxels (see FIGS. 8 and 9). Regions with high resolution use fine voxels while regions with low resolution use coarse voxels. More than two levels of resolution can be used in a mesh. During a simulation of a physical process, particles may be advected between the regions having different resolutions.

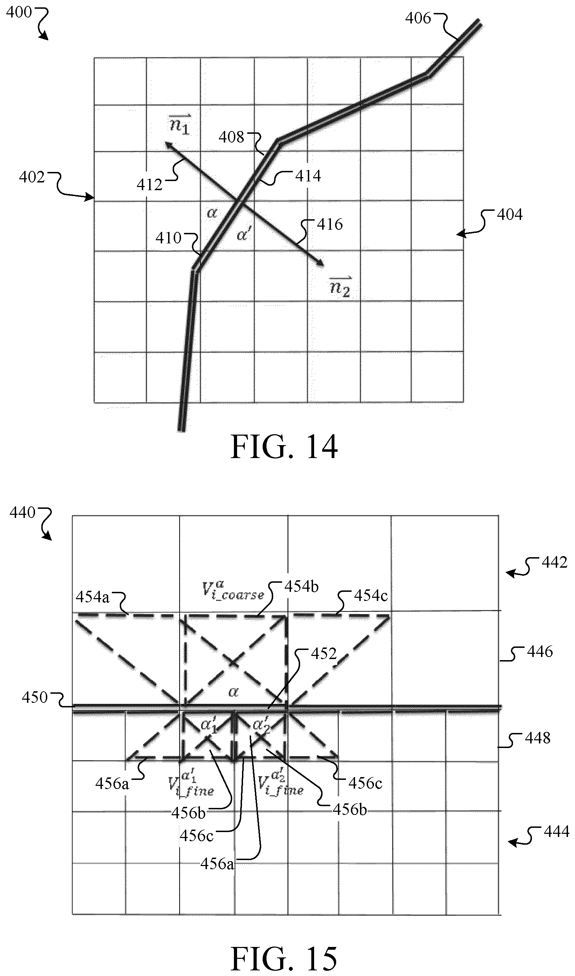

FIG. 14 illustrates a two-dimensional (2D) mesh 400 having two regions 402, 404 separated by a boundary 406. The boundary 406 is formed by double-sided surface elements (e.g., double-sided facets, double-sided surfels). Each side of the double-sided facets interfaces with one of the regions 402, 404 of the mesh. As shown in FIG. 14, double-sided facet 408 has a first side $\alpha$ 410 interfacing with mesh region 402. The surface normal vector $\vec{n_1}$ 412 is oriented toward mesh region 402. The double-sided facet 408 has a second side $\alpha'$ 414 interfacing with mesh region 404. The surface normal vector $\vec{n_2}$ 416 is oriented toward mesh region 404. The boundary 406 can have an arbitrary shape. The double-sided facets enable the regions 402, 404 to be oriented with any arbitrary orientation relative to one another. For example, the mesh in region 402 can be oriented at a different angular orientation to the mesh in region 404. Additionally, the double-sided facets can have different boundary conditions. For example, one side can interface with a porous medium while the opposite side can interface with a fluid domain as described in U.S. Patent 9,646,119, which is hereby incorporated by reference in its entirety.
A boundary between two regions of a three-dimensional (3D) mesh having different resolutions can be defined by a 2D surface. This 2D surface includes a set of flat double-sided facets. While the double-sided facets can arbitrarily cut across a local voxel on a lattice structure as described above, enforcing a lattice aligned constraint reduces geometric weights in the Lattice Boltzmann computation thereby reducing the computations of the fluid flow simulation. The lattice aligned constraint causes each double-sided facet to coincide with a face of a local 3D cubic voxel. Due to this constraint, each facet shape is a square, and all of the facets interfacing with a given resolution in the 3D mesh have the same shape and area. The double-sided facets include a facet (e.g., a coarse facet) on one side interfacing a mesh region (lattice domain) having one resolution (e.g., a coarse resolution). On the opposite side, the double-sided facet has one or more facets (e.g., fine facets) interfacing with a mesh region having a second resolution (e.g., a fine resolution). There is no distance or space between the two sides of the double-sided facet.

The double-sided facets can connect two lattices of any different resolutions (e.g., 1:1, 2:1, 4:1, N:1) of any lattice dimensions. For simplicity, and without limitation, the following description describes an interface between two 3D lattices with resolutions that differ by a factor of two (e.g., 2:1). That is, a first lattice (e.g., coarse lattice) has a linear mesh spacing that is twice the linear mesh spacing of the second lattice (e.g., fine lattice). The area of a 2D (square) facet coinciding with the face of a coarse cubic voxel is four times that of the area of the facet coinciding with the face of a fine cubic voxel. The double-sided facet is constructed as one coarse square facet facing the coarse side on one side of the double-sided facet paired with four fine square facets facing the fine lattice on the second side of the double-sided facet.

FIG. 15 shows a lattice 440 with a coarse region 442 and a fine region 444. The coarse region 442 includes coarse voxels 446. The fine region 444 includes fine voxels 448. An interface 450 is formed between the two regions 442, 444. The interface 450 includes multiple double-sided facets. Double-sided facet 452 includes a coarse facet $\alpha$ on one side that interfaces with a coarse voxel $V_{i\_coarse}^{\alpha}$. The double-sided facet includes two fine facets $\alpha_1'$ and $\alpha_2'$ on the opposite side of coarse facet $\alpha$. The fine facets $\alpha_1'$ and $\alpha_2'$ interface with fine facets $V_{i\_fine}^{\alpha_1'}$ and $V_{i\_fine}^{\alpha_2'}$, respectively. The fine facets $\alpha_1'$ and $\alpha_2'$ have a width that is half of the lattice spacing of the coarse facet $\alpha$. Each facet has parallelepipeds corresponding to lattice velocities that cause particles to advect across the interface 450. Coarse facet $\alpha$ is shown with parallelepipeds 454a, 454b, and 454c corresponding to lattice base vectors (-1,1), (0,1), and (1,1),

respectively. Fine facets $\alpha_1'$ and $\alpha_2'$ each are shown with parallelepipeds 456a, 456b, and 456c corresponding to lattice base vectors (-1,-1), (0,-1) and (1,-1), respectively. Each coarse voxel 446 along the interface 450 interfaces with a double-sided facet similar to double-sided facet 452.

Since the Lattice Boltzmann base-vectors have only integer valued components, and a lattice aligned facet is exactly coincident with a voxel face, then a resulting parallelepiped is exactly overlapped with a voxel for a speed-1 lattice base-vector (e.g., parallelepipeds 454b, 456b), is exactly overlapped with multiple voxels for a higher speed lattice base-vector (not shown), or is half in one voxel and another half in another voxel for a bi-diagonal lattice base-vector (e.g., parallelepipeds 454a, 456a, 454c, 456c). These parallelepipeds simplify the weights computation and the subsequent dynamics as compared with arbitrarily oriented facets and parallelepipeds because the aligned overlapping volumes are much simpler to calculate numerically than those for arbitrarily positioned double-sided facets in a lattice.

While the lattice 440 is shown as a 2D lattice for clarity, the geometric construction of the double-sided facets can also be applied to a 3D lattice. For example, each double-sided facet of a 2D interface in a 3D lattice can have one coarse facet on one side and four fine facets on the opposite side with each fine facet having dimensions that are half the lattice spacing of the coarse region of the lattice.

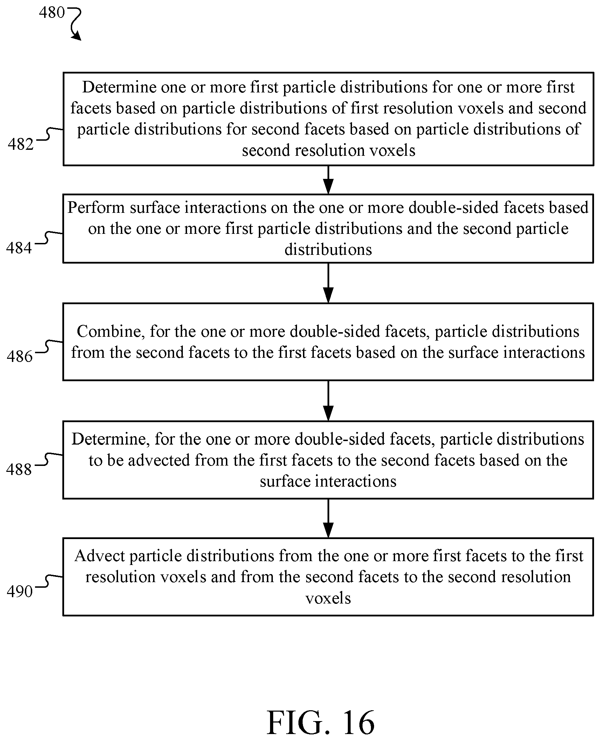

FIG. 16 is a flow chart of an example method 480 for simulating a fluid flow in a simulation space with variable resolution. A data processing system (e.g., system 10) receives a digital representation of the simulation space. The digital representation includes a lattice structure represented as a plurality of voxels. The lattice structure includes a first region (e.g., coarse region) that includes voxels having a first resolution (e.g., coarse resolution) and a second region (e.g., fine region) that includes voxels having a second resolution (e.g., fine resolution). The coarse and fine regions abut at a boundary that includes one or more double-sided facets. Each double-sided facet includes a first facet (e.g., coarse facet) on a first side that interfaces with one or more voxels in the coarse region and second facets (e.g., fine facets) on a second side opposite the first side. The fine facets interface with fine resolution voxels. The data processing system simulates fluid flow across the boundary in the digital representation of the simulation space by performing the following steps.

A. Gather

The data processing system determines one or more coarse particle distributions of the one or more coarse facets based on particle distributions of the coarse resolution voxels and fine particle distributions for the fine facets based on particle distributions of the fine resolution voxels (482). For each lattice base-vector, the particle distribution in the voxels overlapping with a specific parallelepiped is gathered on to a facet (see FIG. 15). The rest of the particle distribution in each of the voxels is advected to its corresponding neighboring voxel according to the advection operations discussed in reference to process 270 (FIG. 5). A facet (e.g., first facet and/or second facet) collects particle distributions according to the lattice base-vectors from voxels via the facet's parallelepipeds that overlap with the voxels. This forms half of the total lattice base-vectors from one side of the double-sided facet (excluding lattice-base vectors parallel to the double-sided facet). For example, the coarse facets collect coarse particle distributions from the coarse resolution voxels that overlap with the coarse facets' parallelepipeds, and the fine facets collect fine particle distributions from the fine resolution voxels that overlap with the fine facets' parallelepipeds.

B. Facet Surface Dynamics

The data processing system performs surface interactions on the one or more double-sided facets based on the one or more coarse particle distributions and the fine particle distributions (484). The double-sided facets collect particle distributions from both lattice sides (coarse side and fine side), to form a complete set of particle distributions for the entire lattice base-vectors for all of the lattice-base vector directions, except the lattice-base vector directions corresponding to the lattice base-vectors that are parallel to the surface of the double-sided facet. For example, half of the lattice-base vector directions come from the coarse particle distributions from the coarse resolution voxels and the other half come from the fine particle distributions from the fine resolution voxels. MME can be constructed on the double-sided facets and the data processing system can perform facet surface dynamics (e.g., particle collisions on a facet, FIG. 13) that obey MME conservation. The double-sided facet samples from both sides as well as constructing MME with definition of the parallel distributions. Sampling from both sides of the double-sided facet results in hydrodynamic fluxes that are exactly equal across the two lattice domains (e.g., coarse resolution region and fine resolution region) that are divided by the double-sided facets.

The data processing system can perform the facet surface dynamics on the fine resolution time step on each of the fine facets on a double-sided facet instead of on the single coarse resolution facet on the double-sided facet at the coarse resolution time step. Performing the facet surface dynamics using the fine resolution time steps can produce different post-dynamic particle distributions on each of the fine resolution facets that can give better accuracy for small spatial and temporal scales as compared with performing the facet surface dynamics using the coarse resolution time step. The particle distributions for a double-sided facet gathered from the coarse resolution lattice side are used across each of the fine resolution facets of the doubled-sided facet. Although the computational cost on the fine resolution side of the double-sided facet is four times higher in space and two times higher in time compared with a single coarse resolution facet, no interpolations are needed between the coarse resolution facets and the fine resolution facets thereby simplifying the computations.

The particle distributions associated with the parallel lattice base-vector directions can be constructed by sampling from both lattice domains. Alternatively, or additionally, the particle distributions associated with the parallel lattice base-vector directions can be constructed through facet-facet advections if facets are linked, or the particle distributions can be stored at each facet similar to the particle distribution of the zero base-vector (i.e., the so called stopped state). Storing the parallel particle distributions at each facet is not overly complicated since the facets are equal squares and there are not facets with complex shapes and sizes. The parallel particle distributions and the stopped state do not contribute to the hydrodynamic fluxes across the facet, and only help to define MME on the double-sided facet.

In some implementations, the data processing system does not perform surface interactions on the double-sided facets. Instead, the data processing system can directly pass the particle distribution from one side of the double-sided facet to the opposite side of the double-sided facet for each lattice velocity direction. For example, a particle distribution can be directly moved from a fine parallelepiped to the corresponding coarse parallelepiped, and vice versa. In implementations using direct pass through, the data processing system still performs a fine-coarse time step conversion so that a coarse parallelepiped at a coarse time step is filled by the corresponding fine parallelepiped in two fine time steps, while a fine parallelepiped is filled in two consecutive fine time steps by the corresponding coarse parallelepiped from each single coarse time step. Without the surface interactions, the particle distributions associated with the parallel lattice base-vector directions are not used because MME is not constructed on the double-sided facet during a direct pass-through operation.

C. Coalesce

The data processing system combines the particle distributions for the one or more double-sided facets based on the surface interactions (486). Since there is only one coarse facet on a double-sided facet, the particle distributions from each fine facet can be combined per each lattice base-vector direction (corresponding to the outgoing lattice base-vector directions pointing to the coarse lattice side) from the fine facets on the same double-sided facet. The lattice aligned constraint simplifies the coalescence process as compared with other surface-based algorithms (e.g., the '260 patent) and the fundamental issue of stream-wise misplacement of particle distributions present in volumetric overlapping techniques is avoided.

### D. Scatter

The data processing system determines, for each double-sided facet, particle distributions to be advected from the coarse facets to the fine facets based on the surface interactions (488). The particle distributions are advected from the coarse facet to the fine facet based on the lattice base-vector directions. The particle distributions from the coarse facet can be split evenly among the corresponding fine facets, or the particle distributions from the coarse facets can be distributed unevenly based on local gradients of the state distributions. Distributing the particles according to the local gradients can reduce local numerical dissipation.

The data processing system advects particle distributions from the one or more coarse facets to the coarse voxels and from the fine facets to the fine voxels (490). The post surface interaction distributions are redistributed into the two 3D lattices each on one side of the double-sided facet. For the coarse lattice side, since the time step size is twice the fine side, then each parallelepiped is filled by two fine time steps. The advection of the post surface interaction particle distributions uses a simplified process with fewer computations compared with the surface-based techniques described in the '260 patents because each side of the double-sided facet interacts with only a single lattice resolution, either coarse or fine.

Additionally, or alternatively, particle distributions can be distributed from facets to voxels unevenly based on local velocity gradients. For particle distributions with parallelepipeds overlapped by more than one voxel, the facet particle distribution may not be scattered evenly to the voxels. A scatter correction scatters the facet particle distribution more to one voxel than the other based on the direction and magnitude of the local velocity gradient. This scatter correction can reduce numerical smearing and increase accuracy while preserving local state conservation.

### E. Facet-Facet Advection

In some implementations, when the edge of a lattice domain is concave, the data processing system advects particle distributions from one facet to another facet (e.g., facet-to-facet advection). For example, at a corner in the boundary between the coarse and fine lattice domains, a parallelepiped from one facet can intersect another facet instead of a voxel. The overlapping volumes of the parallelepipeds are simple due to lattice alignment of all the facets. The facet-to-facet advection can proceed similar to moving from facet to facet discussed relative to process 270 (FIG. 5). In cases with facet-facet advection, parallel particle distributions along one double-sided facet can be gathered and scattered by another double-sided particle that is normal to the first double-sided facet. This operation is an extension of the facet-to-facet advection step.

In implementations utilizing direct pass through (e.g., not performing surface interactions on the double-sided facets), the facet-to-facet advection process is still implemented to compensate for the missing parallelepiped volumes from the fluid domains.

Referring to FIGS. 5 and 16, the results of the processes 270 and 480 can be used in manufacturing a physical structure, e.g., using one or more computer-controlled manufacturing systems. For example, the simulation can be used to optimize a shape of a physical object for improved fluid flow around or through the object. The optimized shape can be used as path planning data for computer-aided manufacturing processes to produce the optimized shape. Examples of shapes that can be optimized include airfoil shapes for aerodynamic bodies, flow paths for internal pipe or channel flows (e.g., for a liquid cooling system), nozzles and diffusers for wind tunnels, etc.

The double-sided facet based variable resolution meshes used in the processes 270 and 480 can be used to predict high-speed jet noise in turbomachinery. The double-sided facets can reduce numerical artifacts from acoustic wave propagation across resolution boundaries thereby improving the accuracy of the prediction in addition to reducing the computational complexity of the simulation as compared with other variable resolution methods.

Alternatively, or additionally, the results of the fluid flow simulation of processes 270 and 480 can be used to predict performance of an aerodynamic body (e.g., predicting generated lift or drag on an airfoil), predicting pressure head loss of a fluid flowing through a pipe or channel, and/or predicting the propagation of acoustic waves (e.g., predicting flow induced noise sources and acoustic wave propagation from an exterior of a vehicle such as a car or airplane to the interior of the vehicle). The techniques described herein improve the accuracy of such fluid flow simulations in predicting performance of an aerodynamic body, predicting pressure head loss of a fluid flowing through a pipe or channel, and/or predicting the propagation of acoustic waves.

### Alternative Embodiment

Alternative to the double-sided facet construction discussed above where one side of the double-sided facet includes one coarse facet, and the opposite side of the double-sided facet includes multiple fine facets, a double-sided facet can be constructed with a single facet on each side of the double-sided facet. The double-sided facet then would be the size of a fine facet. For example, instead of one coarse facet to four fine facets, the alternative double-sided facet has a one-to-one correspondence from the fine side to the coarse side. A coarse voxel in this example interfaces with four double-sided facets. The variable mesh boundary is still constrained to be aligned with the voxel boundaries. This alternative construction of the double-sided facet can result in more accurately collecting fine spatial particle distributions from both coarse and fine domains via the associated parallelepipeds. This alternative approach simplifies transferring distributions between the coarse and fine sides of a double-sided facets due to the one-to-one correspondence. In particular, the coalesce and scatter processes on the double-sided facets can be avoided. The alternative construction, however, increases the number of double-sided facets compared with the first construction (e.g., four times as many double-sided facets are used at a 2:1 boundary). The overlapping volume definitions between the parallelepipeds and voxels is also more complicated particularly on the coarse side of the double-sided facet for the alternative construction compared with the first construction.

Embodiments of the subject matter and the functional operations described in this specification can be implemented in digital electronic circuitry, tangibly embodied computer software or firmware, computer hardware (including the structures disclosed in this specification and their structural equivalents), or in combinations of one or more of them. Embodiments of the subject matter described in this specification can be implemented as one or more computer programs (i.e., one or more modules of computer program instructions encoded on a tangible non-transitory program carrier for execution by, or to control the operation of, data processing apparatus). The computer storage medium can be a machine-readable storage device, a machine-readable storage substrate, a random or serial access memory device, or a combination of one or more of them.

The term "data processing apparatus" refers to data processing hardware and encompasses all kinds of apparatus, devices, and machines for processing data, including by way of example, a programmable processor, a computer, or multiple processors or computers. The apparatus can also be or further include special purpose logic circuitry (e.g., an FPGA (field programmable gate array) or an ASIC (application-specific integrated circuit)). In addition to hardware, the apparatus can optionally include code that produces an execution environment for computer programs (e.g., code that constitutes processor firmware, a protocol stack, a database management system, an operating system, or a combination of one or more of them).

A computer program, which can also be referred to or described as a program, software, a software application, a module, a software module, a script, or code, can be written in any form of programming language, including compiled or interpreted languages, or declarative or procedural languages, and it can be deployed in any form, including as a stand-alone program or as a module, component, subroutine, or another unit suitable for use in a computing environment. A computer program may, but need not, correspond to a file in a file system. A program can be stored in a portion of a file that holds other programs or data (e.g., one or more scripts stored in a markup language document, in a single file dedicated to the program in question, or in multiple coordinated files (e.g., files that store one or more modules, subprograms, or portions of code)). A computer program can be deployed so that the program is executed on one computer or on multiple computers that are located at one site or distributed across multiple sites and interconnected by a data communication network.

Computers suitable for the execution of a computer program can be based on general or special purpose microprocessors or both, or any other kind of central processing unit. Computer-readable media suitable for storing computer program instructions and data include all forms of non-volatile memory on media and memory devices, including by way of example semiconductor memory devices (e.g., EPROM, EEPROM, and flash memory devices), magnetic disks (e.g., internal hard disks or removable disks), magneto-optical disks, and CD-ROM and DVD-ROM disks. The processor and the memory can be supplemented by, or incorporated in, special purpose logic circuitry.

Embodiments of the subject matter described in this specification can be implemented in a computing system that includes a back-end component (e.g., as a data server), or that includes a middleware component (e.g., an application server), or that includes a front-end component (e.g., a client computer having a graphical user interface or a web browser through which a user can interact with an implementation of the subject matter described in this specification), or any combination of one or more such back-end, middleware, or front-end components. The components of the system can be interconnected by any form or medium of digital data communication (e.g., a communication network). Examples of communication networks include a local area network (LAN) and a wide area network (WAN) (e.g., the Internet).

The computing system can include clients and servers. A client and server are generally remote from each other and typically interact through a communication network. The relationship of client and server arises by virtue of computer programs running on the respective computers and having a client-server relationship to each other. In some embodiments, a server transmits data (e.g., an HTML page) to a user device (e.g., for purposes of displaying data to and receiving user input from a user interacting with the user device), which acts as a client. Data generated at the user device (e.g., a result of the user interaction) can be received from the user device at the server.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing can be advantageous.

**EMBODIMENTS**

Although the present invention is defined in the claims, it should be understood that the present invention can also (alternatively) be defined in accordance with the following embodiments:

1. A computer system for digitally simulating fluid flow in a three-dimensional computer aided design (CAD) model of a simulation space with a variable resolution mesh, the computer system comprising:

one or more processors; and
a memory including:

a mesh preparation engine for generating and storing a digital representation of a simulation space, the digital representation including a three-dimensional CAD model of the simulation space including a mesh represented as a plurality of voxels including particles, the mesh comprising a first region comprising first resolution voxels and a second region comprising second resolution voxels, the first region and the second region abutting at a boundary comprising one or more double-sided facets, each double-sided facet comprising a first facet on a first side interfacing with one or more first resolution voxels and second facets on a second side opposite the first side, the second facets interfacing with second resolution voxels; and
a simulation engine for reading, from the mesh preparation engine, the digital representation of the simulation space including the mesh,
with the simulation engine storing instructions for simulating fluid flow using a simulation space with variable resolution, the instructions, when executed by the one or more processors, cause the one or more processors to perform operations comprising:

reading, from the mesh preparation engine, the digital representation of the simulation space including the three-dimensional CAD model of the simulation space including the mesh;
simulating, in the digital representation of the simulation space, a fluid flow across the boundary by:

determining one or more first particle distributions for the one or more first facets based on particle distributions of the first resolution voxels and second particle distributions for the second facets based on particles of the second resolution voxels;
performing surface interactions on the one or more double-sided facets based on the one or more first particle distributions and the second particle distributions;
combining, for the one or more double-sided facets, particle distributions from the second facets to the first facets based on the surface interactions;
determining, for the one or more double-sided facets, particle distributions to be advected from the first facets to the second facets based on the surface interactions; and
advecting the combined particle distributions from the one or more first facets to the first resolution voxels and the determined particle distributions from the second facets to the second resolution voxels.

2. The computer system of embodiment 1, wherein the instructions further comprise advecting particle distributions from the one or more first facets to one or more first facets and from the second facets to second facets.

3. The computer system of embodiment 1, wherein performing the surface interactions comprises performing surface interactions in each second facet for a second resolution time step.

4. The computer system of embodiment 3, wherein combining the particle distributions from the second facets to the one or more first facets comprises combining particle distributions from the second facets for multiple second resolution time steps to the one or more first facets for a first resolution time step.

5. The computer system of embodiment 1, wherein the boundary is constrained to be located at boundaries of voxels of the first region and the second region.

6. The computer system of embodiment 1, wherein simulating the fluid flow preserves mass, momentum, and energy fluxes across the boundary.

7. The computer system of embodiment 6, wherein the instructions further comprise:

determining particle distributions associated with parallel lattice base-vector directions by sampling particle distributions in the first region and in the second region; and
determining mass, momentum, and energy conservation based on the particle distributions associated with the parallel lattice base-vector directions and the surface interactions.

8. The computer system of embodiment 1, wherein gathering the first particle distributions and the second particle distributions is based on lattice base-vectors associated with the first resolution voxels and the second resolution voxels.

9. The computer system of embodiment 1, wherein combining the particle distributions from the second facets to the one or more first facets comprises combining the particle distributions based on lattice base-vectors associated with the second facets.

10. The computer system of embodiment 1, wherein the instructions further comprise:

storing, in the memory, the one or more first particle distributions for the one or more first facets based on the particle distributions of the first resolution voxels and the second particle distributions for the second facets based on the particles of the second resolution voxels;
storing, in the memory, results of the surface interactions performed on the one or more double-sided facets based on the one or more first particle distributions and the second particle distributions;
storing, in the memory, the particle distributions for the one or more double-sided facets combined from the second facets to the first facets based on the surface interactions;
storing, in the memory, the particle distributions to be advected from the first facets to the second facets based on the surface interactions; and
storing, in the memory, the particle distributions advected from the one or more first facets to the first resolution voxels and from the second facets to the second resolution voxels.

11. A method implemented by a data processing system for simulating fluid flow using a simulation space in a three-dimensional computer-aided design (CAD) model of a simulation space with a variable resolution mesh, the method comprising:

receiving, by a data processing system, a digital representation of a simulation space, the digital representation including a three-dimensional CAD model of the simulation space including a mesh represented as a plurality of voxels including particles, the mesh comprising a first region comprising first resolution voxels and a second region comprising second resolution voxels, the first region and the second region abutting at a boundary comprising one or more double-sided facets, each double-sided facet comprising a first facet on a first side interfacing with one or more first resolution voxels and second facets on a second side opposite the first side, the second facets interfacing with second resolution voxels;
simulating, in the digital representation of the simulation space by the data processing system, a fluid flow across the boundary by:

determining, by the data processing system, one or more first particle distributions for the one or more first facets based on particle distributions of the first resolution voxels and second particle distributions for the second facets based on particle distributions of the second resolution voxels;
performing, by the data processing system, surface interactions on the one or more double-sided facets based on the one or more first particle distributions and the second particle distributions;
combining, by the data processing system for the one or more double-sided facets, particle distributions from the second facets to the first facets based on the surface interactions;
determining, by the data processing system for the one or more double-sided facets, particle distributions to be advected from the first facets to the second facets based on the surface interactions; and
advecting, by the data processing system, the combined particle distributions from the one or more first facets to the first resolution voxels and the determined particle distributions from the second facets to the second resolution voxels.

12. The method of embodiment 11, wherein the instructions further comprise advecting particle distributions from the one or more first facets to one or more first facets and from the second facets to second facets.

13. The method of embodiment 11, wherein performing the surface interactions comprises performing surface interactions in each second facet for a second resolution time step, and
wherein combining the particle distributions from the second facets to the one or more first facets comprises combining particle distributions from the second facets for multiple second resolution time steps to the one or more first facets for a first resolution time step.

14. The method of embodiment 11, wherein the boundary is constrained to be located at boundaries of voxels of the first region and the second region; and
wherein simulating the fluid flow preserves mass, momentum, and energy fluxes across the boundary.

15. The method of embodiment 14, further comprising:

> determining, by the data processing system, particle distributions associated with parallel lattice base-vector directions by sampling particle distributions in the first region and in the second region; and
> determining, by the data processing system, mass, momentum, and energy conservation based on the particle distributions associated with the parallel lattice base-vector directions and the surface interactions.

16. The method of embodiment 11, wherein gathering the first particle distributions and the second particle distributions is based on lattice base-vectors associated with the first resolution voxels and the second resolution voxels; and
wherein combining the particle distributions from the second facets to the one or more first facets comprises combining the particle distributions based on lattice base-vectors associated with the second facets.

17. One or more non-transitory machine-readable storage devices storing instructions for digitally simulating fluid flow in a three-dimensional computer aided design (CAD) model of a simulation space with a variable resolution mesh, the instructions being executable by one or more processors, to cause performance of operations comprising:

> receiving a digital representation of a simulation space, the digital representation including a three-dimensional CAD model of the simulation space including a mesh represented as a plurality of voxels including particles, the mesh comprising a first region comprising first resolution voxels and a second region comprising second resolution voxels, the first region and the second region abutting at a boundary comprising one or more double-sided facets, each double-sided facet comprising a first facet on a first side interfacing with one or more first resolution voxels and second facets on a second side opposite the first side, the second facets interfacing with second resolution voxels;
simulating, in the digital representation of the simulation space, a fluid flow across the boundary by:

> > determining one or more first particle distributions for the one or more first facets based on particle distributions of the first resolution voxels and second particle distributions for the second facets based on particles of the second resolution voxels;
> > performing surface interactions on the one or more double-sided facets based on the one or more first particle distributions and the second particle distributions;
> > combining, for the one or more double-sided facets, particle distributions from the second facets to the first facets based on the surface interactions;
> > determining, for the one or more double-sided facets, particle distributions to be advected from the first facets to the second facets based on the surface interactions; and
> > advecting the combined particle distributions from the one or more first facets to the first resolution voxels and the determined particle distributions from the second facets to the second resolution voxels.

18. The one or more non-transitory machine-readable storage devices of embodiment 17, wherein the instructions further comprise advecting particle distributions from the one or more first facets to one or more first facets and from the second facets to second facets.

19. The one or more non-transitory machine-readable storage devices of embodiment 17,

> wherein performing the surface interactions comprises performing surface interactions in each second facet for a second resolution time step, and
> wherein combining the particle distributions from the second facets to the one or more first facets comprises combining particle distributions from the second facets for multiple second resolution time steps to the one or more first facets for a first resolution time step.

20. The one or more non-transitory machine-readable storage devices of embodiment 17, wherein the instructions further comprise:

> determining particle distributions associated with parallel lattice base-vector directions by sampling particle distributions in the first region and in the second region; and

determining mass, momentum, and energy conservation based on the particle distributions associated with the parallel lattice base-vector directions and the surface interactions,

wherein gathering the first particle distributions and the second particle distributions is based on lattice base-vectors associated with the first resolution voxels and the second resolution voxels; and

wherein combining the particle distributions from the second facets to the one or more first facets comprises combining the particle distributions based on lattice base-vectors associated with the second facets.

## Claims

1. A computer system for digitally simulating fluid flow in a three-dimensional computer aided design (CAD) model of a simulation space with a variable resolution mesh, the computer system comprising:

one or more processors; and
a memory including:

a mesh preparation engine for generating and storing a digital representation of a simulation space, the digital representation including a three-dimensional CAD model of the simulation space including a mesh represented as a plurality of voxels including particles, the mesh comprising a first region comprising first resolution voxels and a second region comprising second resolution voxels, the first region and the second region abutting at a boundary comprising one or more double-sided facets, each double-sided facet comprising a first facet on a first side interfacing with one or more first resolution voxels and second facets on a second side opposite the first side, the second facets interfacing with second resolution voxels; and

a simulation engine for reading, from the mesh preparation engine, the digital representation of the simulation space including the mesh,

with the simulation engine storing instructions for simulating fluid flow using a simulation space with variable resolution, the instructions, when executed by the one or more processors, cause the one or more processors to perform operations comprising:

reading, from the mesh preparation engine, the digital representation of the simulation space including the three-dimensional CAD model of the simulation space including the mesh;

simulating, in the digital representation of the simulation space, a fluid flow across the boundary by:

determining one or more first particle distributions for the one or more first facets based on particle distributions of the first resolution voxels and second particle distributions for the second facets based on particles of the second resolution voxels;

performing surface interactions on the one or more double-sided facets based on the one or more first particle distributions and the second particle distributions;

combining, for the one or more double-sided facets, particle distributions from the second facets to the first facets based on the surface interactions;

determining, for the one or more double-sided facets, particle distributions to be advected from the first facets to the second facets based on the surface interactions; and

advecting the combined particle distributions from the one or more first facets to the first resolution voxels and the determined particle distributions from the second facets to the second resolution voxels.

2. The computer system of claim 1, wherein the instructions further comprise advecting particle distributions from the one or more first facets to one or more first facets and from the second facets to second facets.

3. The computer system of claim 1, wherein performing the surface interactions comprises performing surface interactions in each second facet for a second resolution time step.

4. The computer system of claim 3, wherein combining the particle distributions from the second facets to the one or more first facets comprises combining particle distributions from the second facets for multiple second resolution time steps to the one or more first facets for a first resolution time step.

5. The computer system of claim 1, wherein the boundary is constrained to be located at boundaries of voxels of the first region and the second region.

6. The computer system of claim 1, wherein simulating the fluid flow preserves mass, momentum, and energy fluxes across the boundary.

7. The computer system of any preceding claim, wherein the instructions further comprise:

determining particle distributions associated with parallel lattice base-vector directions by sampling particle distributions in the first region and in the second region; and determining mass, momentum, and energy conservation based on the particle distributions associated with the parallel lattice base-vector directions and the surface interactions.

8. The computer system of claim 1, wherein the instructions further comprise:

storing, in the memory, the one or more first particle distributions for the one or more first facets based on the particle distributions of the first resolution voxels and the second particle distributions for the second facets based on the particles of the second resolution voxels; storing, in the memory, results of the surface interactions performed on the one or more double-sided facets based on the one or more first particle distributions and the second particle distributions; storing, in the memory, the particle distributions for the one or more double-sided facets combined from the second facets to the first facets based on the surface interactions; storing, in the memory, the particle distributions to be advected from the first facets to the second facets based on the surface interactions; and storing, in the memory, the particle distributions advected from the one or more first facets to the first resolution voxels and from the second facets to the second resolution voxels.

9. A method implemented by a data processing system for simulating fluid flow using a simulation space in a three-dimensional computer-aided design (CAD) model of a simulation space with a variable resolution mesh, the method comprising:

receiving, by a data processing system, a digital representation of a simulation space, the digital representation including a three-dimensional CAD model of the simulation space including a mesh represented as a plurality of voxels including particles, the mesh comprising a first region comprising first resolution voxels and a second region comprising second resolution voxels, the first region and the second region abutting at a boundary comprising one or more double-sided facets, each double-sided facet comprising a first facet on a first side interfacing with one or more first resolution voxels and second facets on a second side opposite the first side, the second facets interfacing with second resolution voxels; simulating, in the digital representation of the simulation space by the data processing system, a fluid flow across the boundary by:

determining, by the data processing system, one or more first particle distributions for the one or more first facets based on particle distributions of the first resolution voxels and second particle distributions for the second facets based on particle distributions of the second resolution voxels; performing, by the data processing system, surface interactions on the one or more double-sided facets based on the one or more first particle distributions and the second particle distributions; combining, by the data processing system for the one or more double-sided facets, particle distributions from the second facets to the first facets based on the surface interactions; determining, by the data processing system for the one or more double-sided facets, particle distributions to be advected from the first facets to the second facets based on the surface interactions; and advecting, by the data processing system, the combined particle distributions from the one or more first facets to the first resolution voxels and the determined particle distributions from the second facets to the second resolution voxels.

10. The method of claim 9, wherein the instructions further comprise advecting particle distributions from the one or more first facets to one or more first facets and from the second facets to second facets.

11. The method of claim 9, wherein performing the surface interactions comprises performing surface interactions in each second facet for a second resolution time step, and wherein combining the particle distributions from the second facets to the one or more first facets comprises combining particle distributions from the second facets for multiple second resolution time steps to the one or more first facets for a first resolution time step.

**12.** The method of claim 9, wherein the boundary is constrained to be located at boundaries of voxels of the first region and the second region; and wherein simulating the fluid flow preserves mass, momentum, and energy fluxes across the boundary.

**13.** The method of any one of claims 9 to 12, further comprising:

determining, by the data processing system, particle distributions associated with parallel lattice base-vector directions by sampling particle distributions in the first region and in the second region; and

determining, by the data processing system, mass, momentum, and energy conservation based on the particle distributions associated with the parallel lattice base-vector directions and the surface interactions.

**14.** The system of any one of claims 1 to 8 or the method of any one of claims 9 to 13, wherein gathering the first particle distributions and the second particle distributions is based on lattice base-vectors associated with the first resolution voxels and the second resolution voxels; and/or

wherein combining the particle distributions from the second facets to the one or more first facets comprises combining the particle distributions based on lattice base-vectors associated with the second facets.

**15.** One or more non-transitory machine-readable storage devices storing instructions for digitally simulating fluid flow in a three-dimensional computer aided design (CAD) model of a simulation space with a variable resolution mesh, the instructions being executable by one or more processors, to cause performance of operations comprising the method of any one of claims 9 to 14.

FIG. 1

40

Retrieve/receive an auto generated mesh for a physical object being simulated based on corrected CAD drawings, 42

↓

Precompute geometric quantities from the mesh 44

↓

Perform dynamic Lattice Boltzmann Model simulation using mesh 46

# FIG. 2

FIG. 3

prior art

FIG. 4

prior art

272 — Model Simulation Space with Corrected CAD Drawings

270

274 — Identify Voxels Affected by Facets

276 — Time = 1

278 — Gather from Voxels to Facets

280 — Move from Facets to Facets

282 — Perform Facet Surface Dynamics

284 — Move from Voxels to Voxels

284 — Move from Voxels to Voxels

286 — Scatter from Facets to Voxels

288 — Perform Fluid Dynamics

290 — Time = Time + 1

292 — Complete?

No

Yes

294 — Store and/or Display Results

FIG. 5

## FIG. 6
prior art

## FIG. 7A
prior art

## FIG. 7B
prior art

320

324          322                    326

## FIG. 8
prior art

344        340    342              346

344

## FIG. 9
prior art

FIG. 10
prior art

FIG. 11
prior art

FIG. 12

prior art

# FIG. 13

$\int^{390}$

| Compute Boltzmann distribution based on tangential velocity 392 |
|---|

↓

| Compute difference between incoming distribution and Boltzmann distribution 394 |
|---|

↓

| Determine combined momentum from all state differences 396 |
|---|

↓

| Project the momentum difference along the tangential direction of the facet 398 |
|---|

↓

| Generate outgoing states based on above Boltzmann and normal momentum 399 |
|---|

FIG. 14

FIG. 15

480

Determine one or more first particle distributions for one or more first facets based on particle distributions of first resolution voxels and second particle distributions for second facets based on particle distributions of second resolution voxels

482

Perform surface interactions on the one or more double-sided facets based on the one or more first particle distributions and the second particle distributions

484

Combine, for the one or more double-sided facets, particle distributions from the second facets to the first facets based on the surface interactions

486

Determine, for the one or more double-sided facets, particle distributions to be advected from the first facets to the second facets based on the surface interactions

488

Advect particle distributions from the one or more first facets to the first resolution voxels and from the second facets to the second resolution voxels

490

# FIG. 16

Europäisches
Patentamt

European
Patent Office

Office européen
des brevets

## EUROPEAN SEARCH REPORT

**Application Number**

EP 25 18 1030

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 089 744 A (CHEN HUDONG [US] ET AL) 18 July 2000 (2000-07-18) * column 5 - column 22; figures 1-10 * ----- | 1-15 | INV. G06F30/23 G06F30/25 G06F30/28 |
| A | US 2021/406434 A1 (GOPALAKRISHNAN PRADEEP [US] ET AL) 30 December 2021 (2021-12-30) * paragraph [0005] - paragraph [0137]; figures 7-15 * ----- | 1-15 | |
| A | CHEN ET AL: "Grid refinement in lattice Boltzmann methods based on volumetric formulation", PHYSICA A, NORTH-HOLLAND, AMSTERDAM, NL, vol. 362, no. 1, 15 March 2006 (2006-03-15), pages 158-167, XP005281032, ISSN: 0378-4371, DOI: 10.1016/J.PHYSA.2005.09.036 * abstract * * page 159 - page 166 * ----- | 1-15 | |

**TECHNICAL FIELDS SEARCHED (IPC)**

G06F

The present search report has been drawn up for all claims

| Place of search | Date of completion of the search | Examiner |
|---|---|---|
| Munich | 5 August 2025 | Lindner, Anja |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................

& : member of the same patent family, corresponding
    document

EPO FORM 1503 03.82 (P04C01)

**EP 4 660 867 A1**

## ANNEX TO THE EUROPEAN SEARCH REPORT
## ON EUROPEAN PATENT APPLICATION NO.

EP 25 18 1030

This annex lists the patent family members relating to the patent documents cited in the above-mentioned European search report.
The members are as contained in the European Patent Office EDP file on
The European Patent Office is in no way liable for these particulars which are merely given for the purpose of information.

05-08-2025

| Patent document cited in search report | | Publication date | Patent family member(s) | | Publication date |
|---|---|---|---|---|---|
| US 6089744 | A | 18-07-2000 | EP | 1044419 A1 | 18-10-2000 |
| | | | US | 6089744 A | 18-07-2000 |
| | | | WO | 9934309 A1 | 08-07-1999 |
| US 2021406434 | A1 | 30-12-2021 | CN | 113935254 A | 14-01-2022 |
| | | | EP | 3933654 A1 | 05-01-2022 |
| | | | JP | 7614036 B2 | 15-01-2025 |
| | | | JP | 2022022999 A | 07-02-2022 |
| | | | US | 2021406434 A1 | 30-12-2021 |
| | | | US | 2024160817 A1 | 16-05-2024 |

EPO FORM P0459

For more details about this annex : see Official Journal of the European Patent Office, No. 12/82

32

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 73528024
- US 5848260 A
- US 11847391 B
- US 9646119 B